# EUROPEAN PATENT APPLICATION

(11) **EP 3 492 172 A1**
(43) Date of publication of application: **05.06.2019**
(21) Application number: 18208676.9
(22) Date of filing: 27.11.2018
(51) Int. Cl.: B01L 3/02, B65D 47/18, G01F 11/08

(54) **DROPPER**

(30) Priority: 29.11.2017 IT 201700137547
(71) Applicant: Lumson S.p.A., 26010 Capergnanica (CR) (IT)
(72) Inventor: MORETTI, Matteo, 26013 CREMA (CR) (IT)
(74) Representative: Vanosi, Adelio Valeriano

(57) **Abstract**

A dropper comprising a first element (30) which may be associated with the mouth of a container, the first element (30) comprising a support (40) for an elastically deformable suction cap (31) which is sealedly coupled to a pipette (32), a push button (10) which slides axially in relation to the first element (30) in order to compress the suction cap (31), a selector (20) which is rotatably constrained to the first element, with one thereof - i.e. either the selector (20) or the push button (10) - being fitted with at least two grooves (A, B, C) with different depths and with the other - i.e. either the button (10) or the selector (20) - being equipped with at least one flap (11) cooperating with said grooves (A, B, C) so that, when the flap is associated with a groove, following rotation of the selector (20), button stroke length is limited to the depth of the groove with which the flap is associated, so as to adjust the amount of a fluid suctioned and/or dispensed by the dropper, the first element (30) and the button (10) being torsionally coupled.

## Description

### FIELD OF THE INVENTION

The present invention relates to a dropper.

In particular, it relates to a dropper for cosmetic or medical fluids.

### BACKGROUND ART

Document US9347811-B2 discloses a dropper in which operation thereof is performed by means of a button which acts on the deformable component of the said dropper. Turning a selector also rotates the button, thus allowing adjustment of the stroke length thereof and consequently the volume of fluid dispensed during a single stroke of the button.

The dropper disclosed is not attractive from either an aesthetic or a functional point of view. Indeed, the rotation of the button required for the adjustment is not desirable and, especially in high-end products, not acceptable.

### SUMMARY OF THE INVENTION

The object of the present invention is to provide a dropper which allows an adjustment of the quantity of fluid to be metered, in a more aesthetically desirable manner.

This and other objects are achieved by means of a dropper according to the technical teachings of the claims annexed hereto.

### BRIEF DESCRIPTION OF THE FIGURES

Further characteristics and advantages of the invention will become clearer in the description of a preferred but not exclusive embodiment of the device, illustrated - by way of a non-limiting example - in the drawings annexed hereto, in which:
Figure 1 is a lateral view of the dropper according to the present invention;
Figure 2 is an exploded section view of the dropper in Figure 1;
Figure 3 shows, in the left-hand column, top-down perspective views of certain components of the dropper, and in the right-hand column, bottom-up perspective views of the same components shown on the left;
Figure 4 is an axial section of the dropper in Figure 1; and
Figure 5 and Figure 6 are simplified sections taken respectively along section lines V-V and VI-VI in Figure 4.

### DETAILED DESCRIPTION OF THE INVENTION

With reference to the figures stated, reference number 1 is used to denote, as a whole, a dropper.

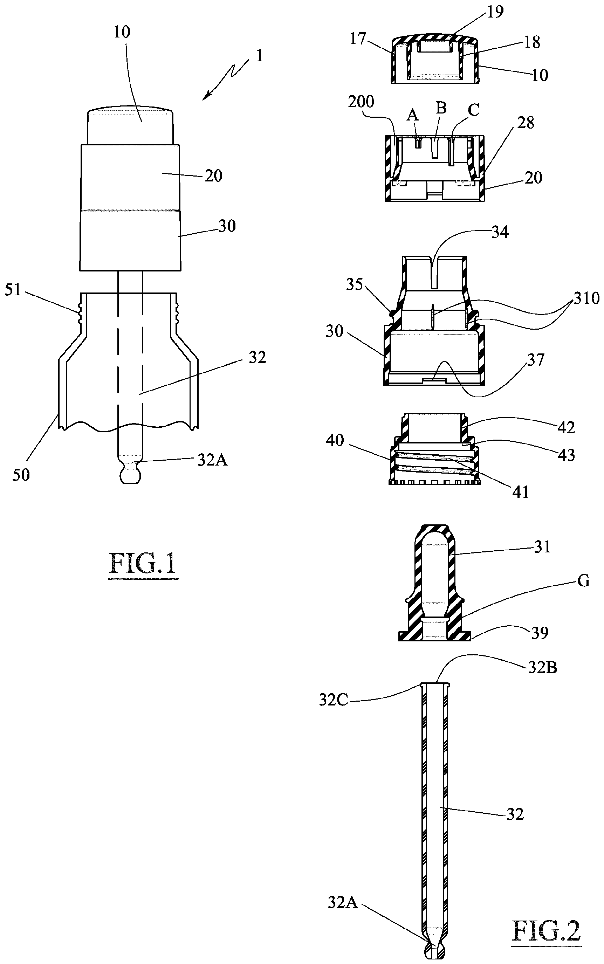

The dropper 1 comprises a first element 30 which may be associated with a mouth of a container 50 only partially schematized in Figure 1. In particular, the first element features, for coupling it to the container, a thread made either directly thereon or on a support 40 fastened to the first element 30.

The container 50 may be a plastic or glass container, which contains a fluid substance, for example of a cosmetic or medical kind. Substances which may be contained in the container may include, for example, anti-wrinkle solutions, anti-ageing solutions, oily solutions, foundations, lotions, dyes, active ingredients, etc.

The dropper may be configured to seal tightly onto the container 50, so as to form a cap therefor, at least when the dropper is on the container.

The container may also have a cap therefor featuring a seal, which is removed upon the first use of the container.

Once opened, the container 50 may be closed with the same dropper, which may be sealed tightly onto a neck thereof, for example by means of a suitable thread 51.

The dropper disclosed comprises a first element 30 equipped with a support 40 for an elastically deformable suction cap 31 sealedly coupled to a pipette 32.

The suction cap 31 may be made of a single piece of soft, elastically deformable rubber. Alternatively, the cap 31 may feature a bellows configuration, made of elastically deformable plastic.

In any case, the cap is associated, in a sealed manner, to a pipette 32. In the present document, the term 'pipette' means a pipe made of glass or plastic, which is preferably transparent and, possibly, with a narrow passage section 32A located at one end thereof configured to be immersed in the fluid contained in the container 50.

The opposite end 32B, which is open, may be equipped with a flange 32C, configured to couple, by means of an undercut seal, with the suction cap 31.

The cap and the pipette may be coupled directly to the first element 30 or they may be coupled thereto by means of an additional element, referred to herein generically as a 'support' 40.

The dropper 1 also features a button 10 which slides axially with respect to the first element 30 in order to compress the said suction cap 31 during the suction/dispensing of the fluid via the pipette.

A selector 20 is rotatably constrained to the first element 30.

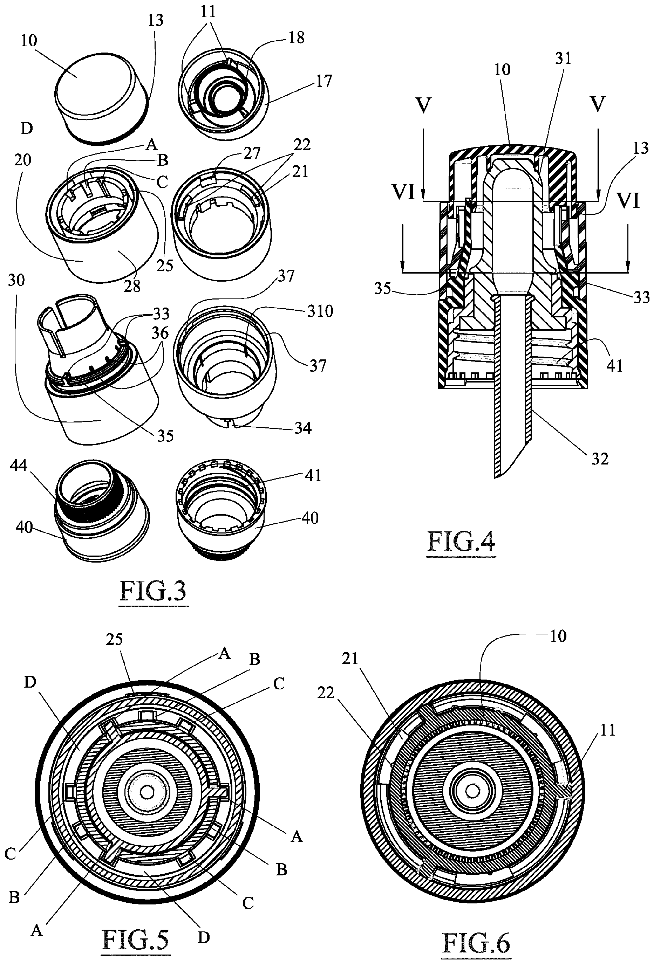

Furthermore, as can be seen from the drawings and with particular reference to Figure 3, the selector 20 has at least two grooves A, B, C (in this case three) with different depths. For example, each groove may have a certain depth in order to allow the dispensing of a specific amount of fluid, for example 0.1 ml, 0.3 ml, and 0.6 ml. Obviously, said amounts are merely exemplary.

The button 10, meanwhile, is equipped with at least one flap 11 cooperating with said grooves A, B, C, with the result that when the flap is associated with a groove -meaning the flap is aligned with a groove following rotation of the selector 20- the button stroke length is limited to the depth of the groove with which the flap is associated, in order to adjust the amount of fluid sucked and/or dispensed by the dropper.

According to the invention, the first element 30 and the button 10 are torsionally fixed in a stable manner. In this way, in order to adjust the amount dispensed by the dropper, a user may act (by turning) solely the selector until the amount concerned is selected. Adjustment is carried out by turning solely the selector, and when doing so, no other part of the dropper is subjected to a rotary movement.

To improve the selection operations, it is possible to engrave or print a reference onto the selector (or onto the first element) to enable a user to rotate the selector into the position connected to the desired dispensing amount.

Moving on to a more detailed description of the dropper 1, and specifically of the various components thereof, it should be noted that the support 40 may comprise a thread 41 configured to screw onto the thread 51 of the container 50, to which the dropper may be screwed.

In the presence of the support 40 (as a separate piece from the first element 30), the support 40 and the suction cap 31 may be mutually fastened by means of an undercut coupling.

Specifically, a groove G in the cap 31 (Figure 2) engages, in an undercut manner, with the cylindrical wall 42 of the support 40. More specifically, a flange 39 on the cap, comes into contact with a shoulder 43 of the support.

For example the support 40 may be snap-fastened to the inside of the first element 30 by means of small teeth 37 (more specifically, three small teeth, see Figure 3).

Furthermore, a knurl 44 may be featured between the support 40 and the first element 30, wherein at least one first projection 310 is engaged therewith in order to torsionally constrain the first element 30 to the support 40. This proves useful when screwing the dropper onto the container, via the thread 41 on the support.

Advantageously, four projections 310 may be featured, extending longitudinally over the inner surface of the element 30, whereas the knurl 44 may be provided on an outer crown of the support 40.

The first element 30 may have a relief 35 (for example in the form of a continuous protruding flange) which engages, in an undercut manner, with blocks 27 (for example three blocks) positioned at a free end of the selector 20 to constrain the selector 20 to the first element 30.

In order to limit the rotation of the selector 20 with respect to the first element 30, the latter may comprise at least one clamp 33 (or rather, three clamps extending from the edge 35) designed to come into contact with a protruding part of the said selector 20.

More specifically, the inner surface of the selector 20 has projections 21 (which may be arranged as within a sector of a circular crown) endowed with a surface cavity 22 cooperating with the teeth 36 made on a conical outer surface of the first element for the snap-alignment of the cavity A, B, C with the flap 11. In this way, when the user rotates the selector, the user is alerted to the fact that an alignment position has been reached between the flap 11 and one of the cavities A, B, C, by means of a 'snap' which is clearly perceivable by the user's fingers.

The cavities A, B, C, may be made on the selector 20, in correspondence with an at least partly cylindrical internal wall 24, which extends towards the centre of the selector, set apart therefrom by a perimetral wall 28 (also cylindrical), so as to form a gap 200 intended to house the skirt 17 of the button.

The projections 21 on the selector 20 can also come into contact with the clamp 33 (or rather the clamps 33) of the first element 30, to limit the rotation thereof.

The torsional coupling between the button 10 and the first element 30 is achieved by means of at least one flap 11 engaging with a guide 34 on said first element 30. The guide 34, or rather the guides 34 (one for each flap 11), are essentially grooves made in an inner cylindrical wall 340 of the first element 30.

Advantageously, the flap 11 which engages with the guide 34 for the torsional coupling is the same as the guide that cooperates with the recess A, B, C in the selector, to adjust the stroke length of the button 10.

In the present embodiment, the button 10 has three flaps 11, which protrude from a cylindrical portion 18, which extends from a cover 19 of the button, set apart by a perimetral skirt 17, which also extends from the cover 19 of the button. The flaps 11 are located in the gap between the perimetral skirt and the cylindrical portion 18.

Consequently, as mentioned earlier, there are three guides 34 which cooperate with the flap 11 in order to torsionally couple the button 10 to the first element 30.

Furthermore, the button 10 has an edge 13, advantageously made at an outer end of the skirt 17, which is engaged, via a snap-fastening, with teeth 25 protruding towards the centre of the selector 20 from the perimeter wall 28 thereof.

To end the disclosure, it must be emphasized that, given the presence of three flaps 11, there are three 'groups' of cavities A, B, C present and each group cooperates with a specific flap 11.

In this way, when the button is pressed and reaches the bottom of one of the cavities, it is perfectly level and is not prone to becoming unbalanced.

Finally, it should be said that the selector 20 may feature a portion D without a cavity, and this portion may be aligned with the flap 11 in a specific stable position (by means of the teeth 36) of the selector. In this position, when the button 10 is pressed, there is no stroke and the button remains in a position in which the fluid is not dispensed. Indeed, the said position is a safety position, in which the dropper cannot dispense.

Various embodiments of the innovation have been disclosed herein, but further embodiments may also be conceived using the same innovative concept.

## Claims

1. A dropper comprising a first element (30) configured to be associated with the mouth of a container, the first element (30) comprising a support (40) of an elastically deformable suction cap (31) sealedly coupled to a pipette (32), a push button (10) axially slidable relative to the first element (30) for compressing the suction cap (31), a selector (20) rotatably constrained to the first element, one between the selector (20) and the push button (10) having at least two grooves (A, B, C) of different depth and the other between the button (10) and the selector (20) being provided with at least one flap (11) cooperating with said grooves (A, B , C) so that, when the flap is associated with a groove, following a rotation of the selector (20), a stroke of the button is limited to the depth of the groove to which the flap is associated, so as to adjust the volume of a fluid aspirated and / or dispensed by the dropper, the first element (30) and the button (10) being torsionally fixed, so that a rotation of the selector (20) do not induce a corresponding rotation of the button (10).

2. The dropper according to the preceding claim, wherein the support (40) comprises a thread (41) configured to be screwed onto a container to which the dropper can be screwed, the support (40) and the suction cap (31) being mutually fixed by means of a coupling undercut.

3. The dropper according to claim 1, wherein the support (40) is snap fitted in the first element (30), and / or between the support (40) and the first element (30) a knurl (44) is present, engaging a first projection (310) to torsionally couple the first element (30) to the support (40).

4. The dropper according to claim 1, wherein the first element (30) has a relief (35) which engages in an undercut manner with blocks (27) of the selector to constrain the selector (20) to the first element (30).

5. The dropper according to claim 1, wherein the first element (30) comprises at least one stopper (33) adapted to engage a part of the selector (20) in order to angularly limit the rotation.

6. The dropper according to claim 1, wherein the selector (20) has projections (21) provided with a cavity (22) cooperating with teeth (36) of the first element for a snap alignment of said flap (11) with respect to said grooves (A, B, C), and / or in which the projections (21) engage the stop (33) of the first element (30) to limit a rotation thereof.

7. The dropper according to claim 1, wherein the torsional coupling between the button (10) and the first element (30) is realized by means of at least one flap (11) engaged in a guide (34) of said first element (30).

8. The dropper according to the preceding claim, wherein the at least one flap (11) engaged in the guide (34) for the torsional coupling is the same that cooperates with the recess (A, B, C) of the selector, to adjust the stroke of the button (10).

9. The dropper according to claim 1, wherein the button (10) has a rib (13) which is engaged with teeth (25) of the selector (20).
